# EUROPÄISCHE PATENTANMELDUNG

(11) **EP 4 305 943 A1**
(43) Veröffentlichungstag der Anmeldung: **17.01.2024**
(21) Anmeldenummer: 23181233.0
(22) Anmeldetag: 23.06.2023
(51) Int. Cl.: A01C 7/06, A01C 7/08, A01C 15/04

(54) **ANORDNUNG ZUR PNEUMATISCHEN FÖRDERUNG EINES HILFSSTOFFS ZU REIHENEINHEITEN EINER SÄMASCHINE**

(30) Priorität: 11.07.2022 FR 2207092
(71) Anmelder: Ribouleau Monosem, 79240 Largeasse (FR)
(72) Erfinder: DOLE, DAMIEN, 68163 Mannheim (DE); CATTONI, FLAVIEN, 68163 Mannheim (DE)
(74) Vertreter: Reichert, Christian

(57) **Zusammenfassung**

Eine Anordnung zur pneumatischen Förderung eines Hilfsstoffs zu einer mit einer Mehrzahl an Reiheneinheiten (28) ausgestatteten Sämaschine (12) umfasst einen von der Sämaschine (12) im Abstand angeordneten Behälter (14) zur Aufnahme des Hilfsstoffs, eine Mehrzahl an Dosiereinheiten (88), die jeweils mit einem ihnen zugeordneten Antrieb (104) verbunden und konfiguriert sind, Hilfsstoff aus dem Behälter (14) abzumessen und in einen Luftstrom einzufügen, und eine Mehrzahl an Leitungen (34, 36, 40, 42, 64, 66), mit denen jeweils ein von einer Dosiereinheit (88) mit dem Hilfsstoff beaufschlagter Luftstrom separat an eine Reiheneinheit (28) führbar ist.

## Beschreibung

Die vorliegende Erfindung betrifft eine Anordnung zur pneumatischen Förderung eines Hilfsstoffs zu Reiheneinheiten einer Sämaschine.

### Stand der Technik

Im Stand der Technik sind Sämaschinen nicht nur dazu ausgelegt, Saatgut in den Boden einzubringen, sondern auch mit Einrichtungen ausgestattet, um Hilfsstoffe in den Boden einzubringen, wie Dünger oder andere Chemikalien, z.B. zur Bekämpfung von Insekten.

So zeigt die DE 31 42 341 C2 eine Drillmaschine mit einem Behälter für Saatgut und zwei Behältern für unterschiedliche Hilfsstoffe. Die Materialien aus den einzelnen Behältern werden pneumatisch zu Säscharen gefördert, mit welchen das Saatgut und ein erster Hilfsstoff (Dünger) gemeinsam in einer Furche abgelegt werden, während der zweite Hilfsstoff (Stickstoffdünger) separat über den Boden verteilt wird.

Die US 2016/0165792 A1 zeigt eine Drillmaschine mit getrennten Tanks für unterschiedliche Materialien, die pneumatisch zu Haupt- und Unter-Verteilern gefördert werden, von denen es zu Reiheneinheiten gelangt, um das Material in Furchen abzulegen. Um gewünschte Ausbringraten zu erreichen, erfolgt eine Drehzahlregelung der pneumatischen Gebläse und der Zufördereinrichtungen zur Einbringung des Materials in den Luftstrom. Ähnliche Anordnungen mit pneumatischer Saatgutförderung zu Verteilern und von dort zu den Säeinheiten, jedoch mit Abschaltmöglichkeiten der Saatgutzufuhr zu einzelnen oder mehreren Säeinheiten stromauf oder stromab der Verteiler, zeigen die DE 197 23 370 A1 und DE 10 2017 223 789 A1.

Bei heutigen Sämaschinen, insbesondere zur Ausbringung von einzelnen Saatgutkörnern (Einzelkornsämaschinen), ist eine automatische Kontrolle der ausgebrachten Säraten vorgesehen, die durch eine entsprechende elektronische Ansteuerung eines Antriebs der Saatgutabgabe der einzelnen Reiheneinheiten erfolgt. Hierbei können die einzelnen Reiheneinheiten ortsspezifisch ein- und ausgeschaltet werden, z.B. beim Ein- und Ausfahren aus einer oder in eine Furche auf dem Feld, und die Säraten können getrennt voneinander ortsspezifisch variiert werden, z.B. zur Anpassung an lokale Gegebenheiten (vgl. beispielsweise EP 3 278 645 A1).

Eine ortsspezifische Kontrolle nicht nur der Särate, sondern auch der Abgabe von Hilfsstoffen (Dünger) durch separate Antriebe für die jeweiligen Motoren für die Saatgut- und Düngerabgabe einer Reiheneinheit wird in der CN 105917819 A1 gezeigt. Ein ähnliches System wird von der Anmelderin unter der Bezeichnung "FertiSmart" vertrieben, bei dem an einem Behälter für Hilfsstoffe mehrere Dosiereinheiten angeordnet sind, um den Hilfsstoff durch einzelne Dosiereinheiten, denen jeweils ein Motor zugeordnet ist, separat zuzumessen und mittels der Schwerkraft den Reiheneinheiten zuzuführen, in welchen der Hilfsstoff seitlich beabstandet vom Saatgut im Boden abgelegt wird (Prospekt "ValoTerra" der Anmelderin, Druckvermerk 92800EN).

### Aufgabe

Es ist demnach erkennbar, dass im Stand der Technik eine ortsspezifische Ansteuerung der Hilfsstoffabgabe in Verbindung mit einem auf der Schwerkraft basiertem Transport der Hilfsstoffe vorgesehen ist. Diese Vorgehensweise ist auf relativ kleine Behälter eingeschränkt, die in der Nähe der Reiheneinheiten angebracht werden müssen. Bei pneumatischem Transport der Hilfsstoffe, der insbesondere dann Verwendung findet, wenn der Hilfsstoffbehälter räumlich von den Säeinheiten getrennt ist, d.h. beispielsweise an der vorderen Dreipunktkupplung eines Ackerschleppers oder auf einem zwischen dem Ackerschlepper und der Sämaschine angeordneten Fahrgestell ("Air Cart") angeordnet ist, wird der Hilfsstoff durch eine oder (wenn der Luftstrom aufgespalten wird) mehrere Leitungen pneumatisch zu einem oder mehreren Verteilern an der Sämaschine gefördert und von dem oder denen aus er zu den einzelnen Reiheneinheiten gelangt, wozu beispielsweise auf die US 2016/0165792 A1 und auf den erwähnten Prospekt "ValoTerra" der Anmelderin verwiesen sei. Hierbei ist keine reihenspezifische Ansteuerung der Hilfsstoffe möglich.

Die vorliegende Erfindung hat sich zum Ziel gesetzt, die Nachteile des Standes der Technik zu vermeiden und eine Anordnung zur pneumatischen Förderung von Hilfsstoffen zu Reiheneinheiten einer Sämaschine vorzuschlagen, die eine separat kontrollierbare Förderrate ermöglicht.

### Lösung

Die vorliegende Erfindung wird durch die Ansprüche definiert.

Eine Anordnung zur pneumatischen Förderung eines Hilfsstoffs zu einer mit einer Mehrzahl an Reiheneinheiten ausgestatteten Sämaschine umfasst einen von der Sämaschine im Abstand angeordneten Behälter zur Aufnahme des Hilfsstoffs, eine Mehrzahl an Dosiereinheiten, die jeweils mit einem ihnen zugeordneten Antrieb verbunden und konfiguriert sind, Hilfsstoff aus dem Behälter abzumessen und in einen Luftstrom einzufügen, und eine Mehrzahl an Leitungen, mit denen jeweils ein von einer Dosiereinheit mit dem Hilfsstoff beaufschlagter Luftstrom separat an eine Reiheneinheit führbar ist.

Mit anderen Worten erfolgt der pneumatische Transport des Hilfsstoffs in unterschiedlichen Leitungen vom (beabstandet von der Sämaschine angeordneten, d.h. räumlich getrennten) Behälter zur Sämaschine. Jeder Reiheneinheit der Sämaschine ist eine Dosiereinheit zugeordnet, die einen eigenen Antrieb aufweist und somit separat ansteuerbar ist und je Zeiteinheit eine gewünschte Menge an Hilfsstoff aus dem Behälter entnimmt (abmisst) und in einen Luftstrom einfügt, der durch eine zugeordnete Leitung an die Reiheneinheit gelangt. Auf diese Weise vermeidet man die oben geschilderten Nachteile des Standes der Technik.

Bei einer möglichen Ausführungsform ist der Behälter an der Vorderseite eines Ackerschleppers angebracht und die Sämaschine an der Rückseite des Ackerschleppers vorgesehen. Es wären jedoch auch beliebige andere Ausführungsformen denkbar, z.B. mit einem separaten Wagen, der zwischen einem Ackerschlepper und der Sämaschine angeordnet ist und den Behälter trägt.

Es wird weiterhin vorgeschlagen, eine Anzahl an Dosiereinheiten in einer Reihe anzuordnen, die insbesondere in Vorwärtsrichtung ausgerichtet sein kann. Diese Anordnung ermöglicht, zwei Reihen von Dosiereinheiten nebeneinander anzuordnen. Man könnte die Reihe oder Reihen der Dosiereinheiten jedoch auch quer zur Vorwärtsrichtung anbringen und/oder die Dosiereinheiten in einem beliebigen anderen Muster, z.B. sägezahnförmig positionieren.

Die Leitungen zwischen dem Ackerschlepper und dem Behälter und/oder der Sämaschine können durch Mehrfach-Kupplungseinheiten trennbar verbunden werden, was die Anbringung und Demontage erleichtert.

### Ausführungsbeispiel

In den Zeichnungen ist ein nachfolgend näher beschriebenes Ausführungsbeispiel der Erfindung dargestellt. Es zeigt:
- Fig. 1: eine Draufsicht auf einen Ackerschlepper mit einer rückwärtig angebrachten Sämaschine und einem an seiner Vorderseite angebrachten Behälter für Hilfsstoffe,
- Fig. 2: eine seitliche Ansicht der Sämaschine der Figur 1,
- Fig. 3: eine perspektivische Ansicht des Behälters der Figur 1,
- Fig. 4: eine Ansicht nach Figur 3 in teilweise demontiertem Zustand,
- Fig. 5: einen perspektivischen Ausschnitt der Figur 4,
- Fig. 6: eine Ansicht nach Figur 3, jedoch von unten,
- Fig. 7: einen schematischen vertikalen Schnitt durch den Behälter, und
- Fig. 8: ein Schema zur elektronischen Ansteuerung der Antriebe der Reiheneinheiten der Sämaschine und der Dosiereinheiten der Hilfsstoffe.

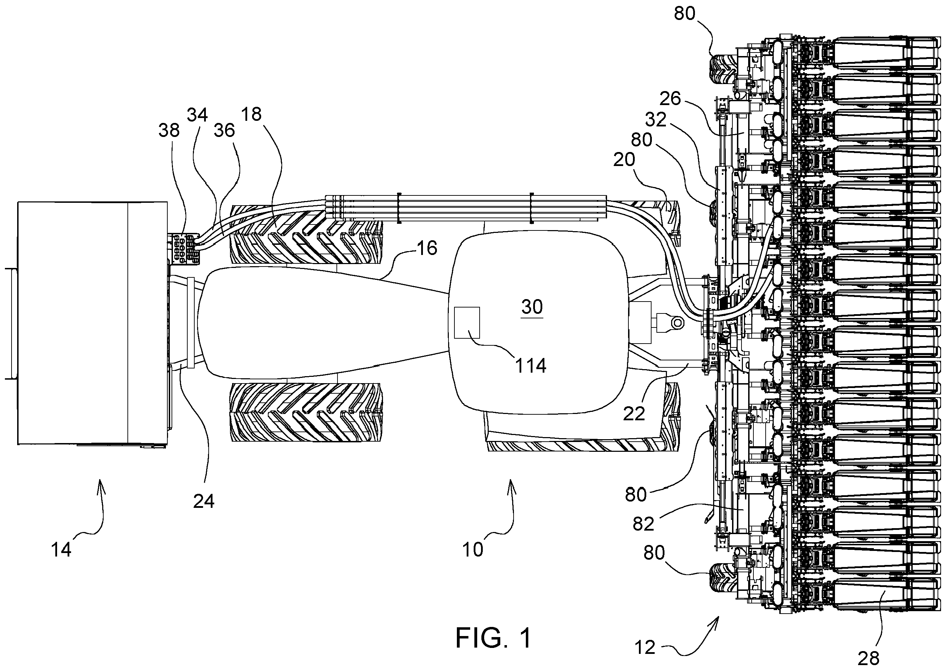

In der Figur 1 ist ein Ackerschlepper 10 dargestellt, der sich auf einem Fahrgestell 16 aufbaut und durch vordere, lenkbare Räder 18 und antreibbare, rückwärtige Räder 20 auf dem Boden abstützt. Ein Bedienerarbeitsplatz befindet sich in einer Kabine 30. Am rückwärtigen Ende des Fahrgestells 16 ist eine Dreipunktkupplung 22 angeordnet, an welcher ein tragendes Gestell 26 einer Sämaschine 12 lösbar befestigt ist. Die Sämaschine 12 umfasst eine Anzahl (im dargestellten Beispiel: sechzehn) seitlich nebeneinander angeordneter Reiheneinheiten 28. Das tragende Gestell 26 ist durch Stützräder 80 auf dem Erdboden abgestützt und durch Aktoren 32 in eine eingefaltete Stellung für den Straßentransport bringbar, indem äußere Abschnitte des Gestells 26 nach oben und ggf. innen verschwenkt werden. An der Vorderseite des Ackerschleppers 10 ist eine weitere Dreipunktkupplung 24 angeordnet, an welcher lösbar ein Behälter 14 für Hilfsstoffe angebracht ist.

Durch Leitungen 34, 36 (und Leitungen 42, 44, 64, 66, unten diskutiert), von denen in den Figuren aus Gründen der Übersichtlichkeit nur ein Teil eingezeichnet ist, werden die Hilfsstoffe vom Behälter 14 zu den Reiheneinheiten 28 transportiert. In Realität entspricht die Anzahl der Leitungen 34, 36 (und 40, 42, 64, 66) der Anzahl der Reiheneinheiten 28. Es wären bei dem gezeigten Beispiel demnach insgesamt sechzehn Leitungen 34, 36, 40, 42, 64, 66 vorhanden. Die Leitungen werden an der in Fahrtrichtung, die in der Figur 1 von rechts nach links verläuft, rechten Seite des Ackerschleppers 10 entlang nach hinten zur Sämaschine 12 geführt, da die Kabine 30 üblicherweise von der linken Seite her betreten und verlassen wird. Die Leitungen 36, 36 könnten in einer anderen Ausführungsform auch an der linken Seite des Ackerschleppers 10 entlanggeführt werden, insbesondere für Länder mit Linksverkehr, oder an anderer Stelle, z.B. an der Unterseite des Ackerschleppers 10 verlegt werden. Eine Mehrfach-Kupplungseinheit 38 ermöglicht es, alle Leitungen 34, 36 gemeinsam mit am Behälter 14 angeordneten Abschnitten 40, 42 der Leitungen zu verbinden und davon zu trennen, um den Behälter 14 vom Ackerschlepper 10 abzunehmen, wenn die Sämaschine 12 nicht benutzt wird, um den Ackerschlepper 10 für andere Aufgaben einzusetzen. Die Leitungen 34, 36 können am Ackerschlepper 10 verbleiben, auch wenn sie nicht benötigt werden, oder davon abgebaut werden.

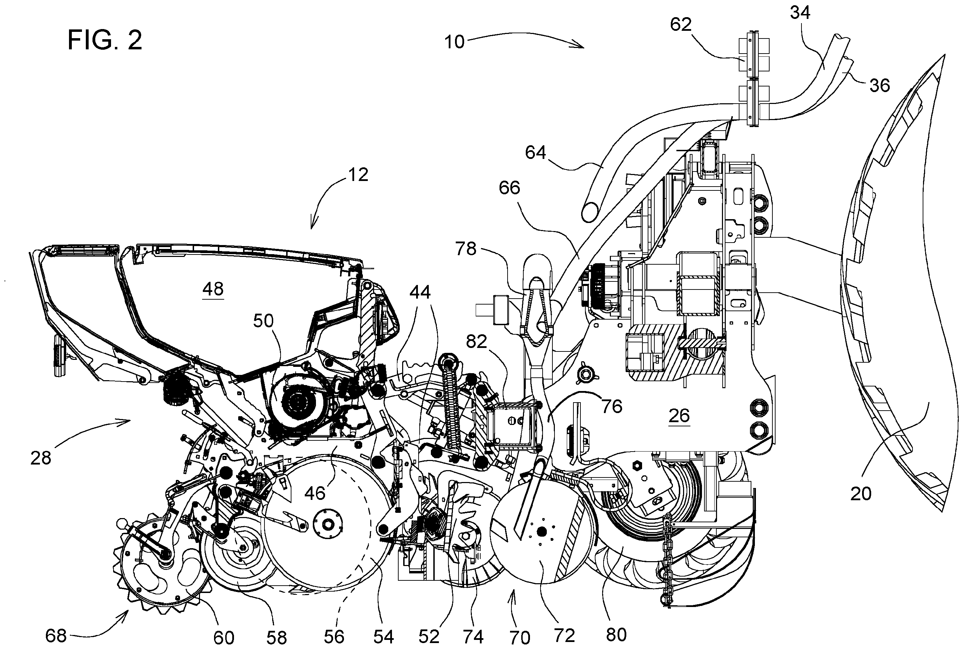

Die Figur 2 zeigt eine Reiheneinheit 28 in einer seitlichen Ansicht. Die Reiheneinheit 28 umfasst eine Säeinheit 68 mit einem Tragrahmen 46, der durch eine Parallelogrammaufhängung 44 höhenverstellbar und bodenkonturfolgend an einem Querträger 82 des Gestells 26 angebracht ist. Am Tragrahmen 46 sind ein Saatgutbehälter 48, eine Dosiereinheit 50 für Saatgut, ein Reihenräumer 54, ein Furchenöffner 54, ein die Furchentiefe vorgebendes Tiefeneinstellrad 56, ein Andrückrad 58 zum Andrücken des von der Dosiereinheit 50 in die vom Furchenöffner 54 erzeugte Furche abgelegten Saatguts und ein Schließrad 60 angeordnet, das die Furche letztlich wieder schließt.

Zudem ist der Reiheneinheit 28 eine Abgabeeinrichtung 70 für Hilfsstoffe zugeordnet. Die umfasst einen Furchenöffner 72 und ein Schließrad 74. In die vom Furchenöffner 72 erzeugte Furche wird der Hilfsstoff aus dem Behälter 14 über ein Rohr 76 eingeführt und die Furche durch das Schließrad 74 wieder geschlossen. Der Hilfsstoff, bei dem es sich um Dünger und/oder andere Chemikalien, wie Insektizide und dgl. handeln kann, gelangt durch eine der Leitungen 34, 36 und eine Leitung 64 oder 66 über einen Druckminderer 78 in das Rohr 76. Die Förderung des Hilfsstoffs durch die Leitungen 34, 36, 64, 66 erfolgt pneumatisch, wie weiter unten erläutert. Die am Ackerschlepper 10 angebrachten Leitungen 34, 36 einerseits und die an der Sämaschine 12 angebrachten Leitungen 64, 66 andererseits sind ebenfalls durch eine Mehrfach-Kupplungseinheit 62 untereinander verbunden. Die Abgabeeinrichtung 70 kann gemeinsam mit der Säeinheit 68 an der Parallelogrammaufhängung 44 abgestützt sein und sich in vertikaler Richtung bewegen, oder sie ist am direkt Gestell 26 aufgehängt, insbesondere in verstellbarer Höhe. Die Furchen der Säeinheit 68 und der Abgabeeinrichtung 70 können, müssen jedoch nicht, seitlich relativ zueinander versetzt sein.

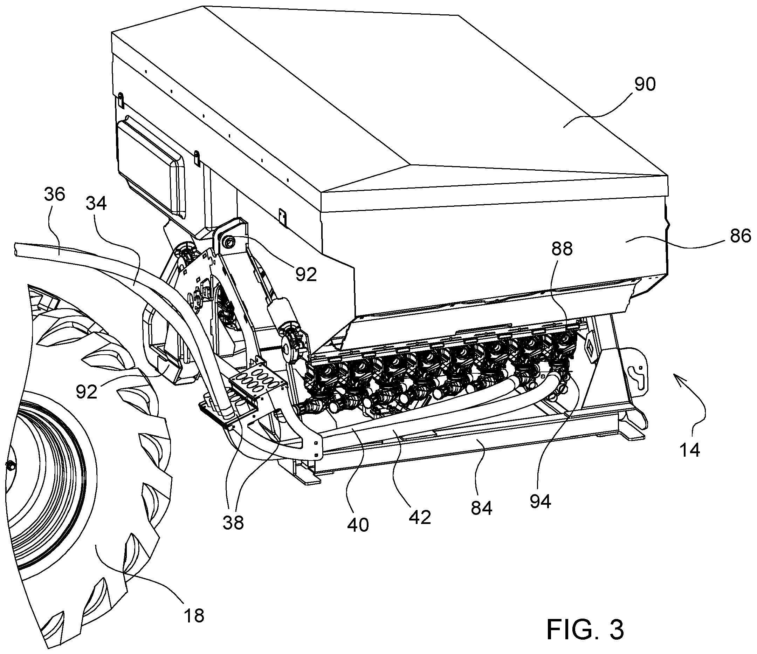

Es wird nun auf die Figur 3 verwiesen, in welcher der Behälter 14 gezeigt wird. Der Behälter 14 umfasst eine Wanne 86, die auf einem tragenden Gestell 84 angeordnet ist, welches mit Anschlusselementen 92 für die vordere Dreipunktkupplung 24 des Ackerschleppers 10 verbunden ist. Die Wanne 86 ist durch einen zum Nachfüllen von Hilfsstoffen und zur Reinigung des Innenraums der Wanne 86 abnehmbaren Deckel 90 verschließbar. Die Wanne 86 hat an ihren beiden Seiten jeweils insgesamt acht bodenseitige Auslässe 96, unterhalb denen jeweils ein Einlass einer Dosiereinheit 88 angeordnet ist, deren Auslass in eine Kammer 94 mündet. Im mittleren Bereich ist die Wanne 86 nach oben hin gewölbt oder dreieckig ausgeführt, damit sie möglichst komplett durch die Auslässe 96 hindurch geleert werden kann, ohne dass größere Reste auf ihrem Boden verbleiben.

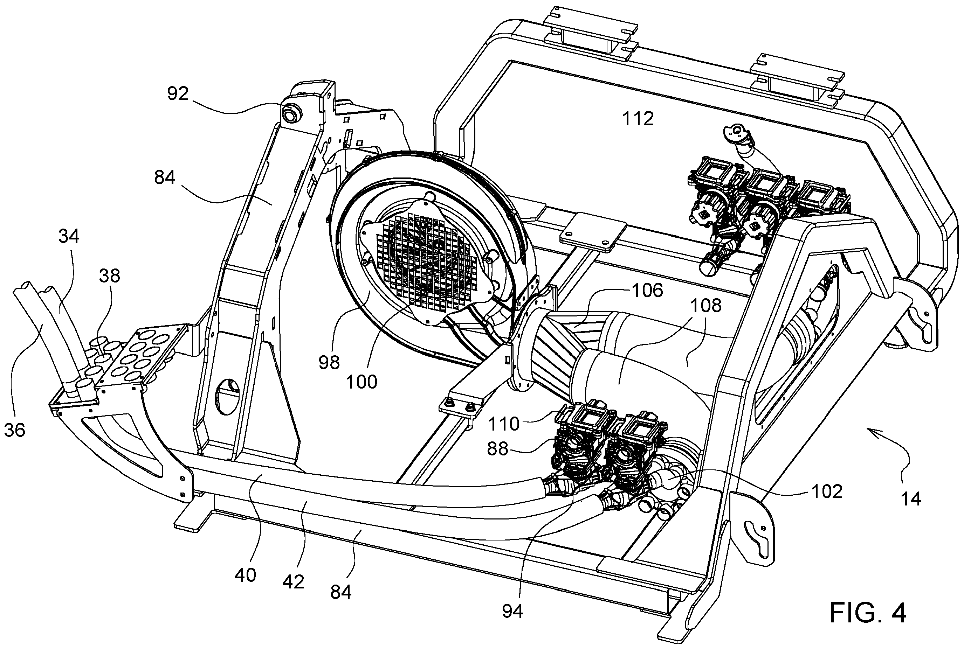

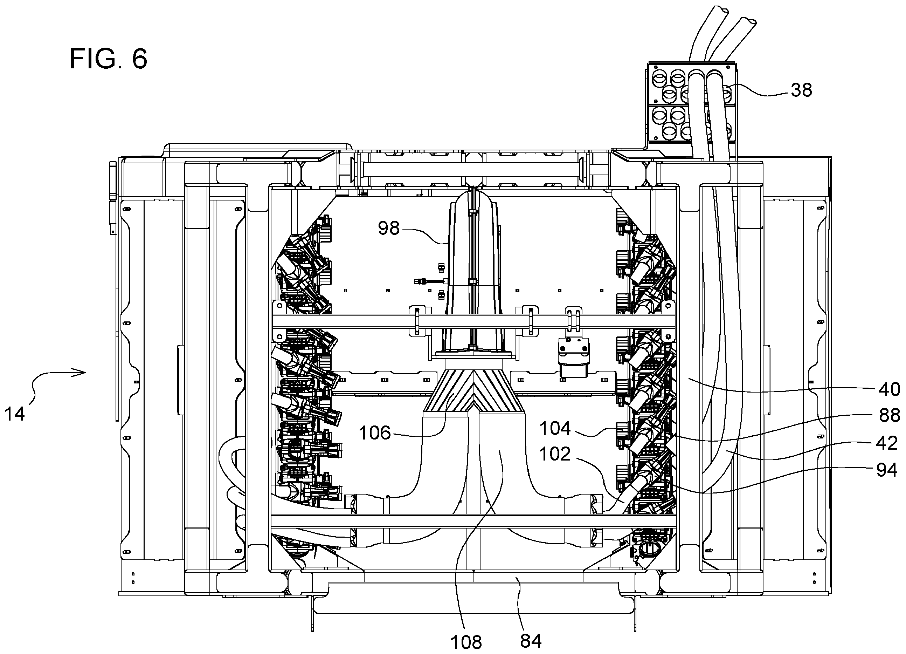

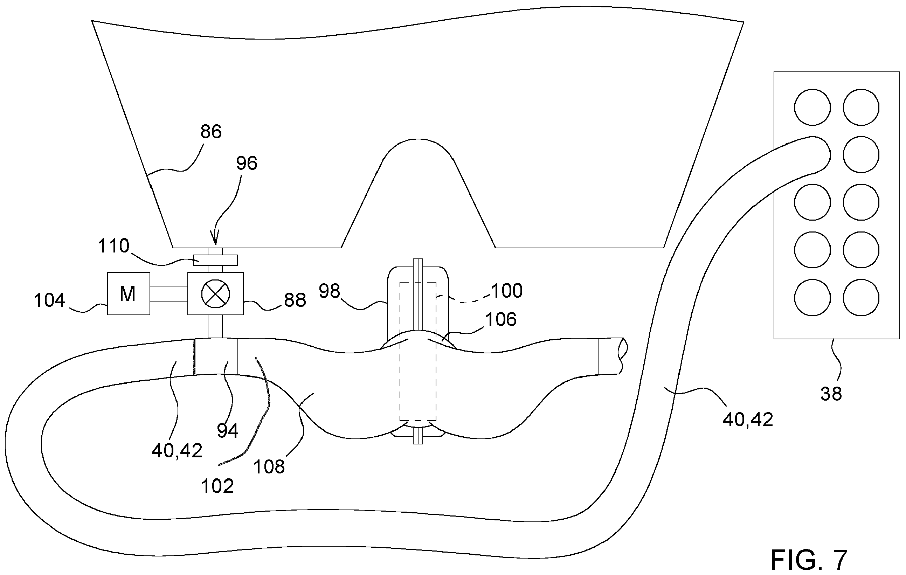

Die Kammer 94 wird durch ein Gebläse 98 mit einem Axiallüfter 100 und eine Leitung 102 mit Druckluft beaufschlagt und mündet in eine der Leitungen 34, 36. Die Dosiereinheit 88 umfasst ein Zellenrad 106 oder eine beliebige andere Einrichtung zum Abmessen (d.h. aktives oder passives Abfördern, Entnehmen oder Zumessen) des ihn durch den Auslass 96 durch die Schwerkraft aus der Wanne 86 zugeführten Hilfsstoffs, das oder die durch einen Antrieb 104 in Drehung oder anderweitig in Bewegung versetzbar ist. Hierzu sei auf die Figuren 4 bis 7 verwiesen. Die Auslässe 96 auf beiden Seiten der Wanne 86 sind demnach in sich in Vorwärtsrichtung des Ackerschleppers 10 erstreckenden Reihen angeordnet, was auch für die Dosiereinheiten 88 und die Kammern 94 gilt. Somit wird im Ergebnis jede Abgabeeinrichtung 70 der Sämaschine 12 getrennt voneinander pneumatisch mit der ihm durch die zugehörige Dosiereinrichtung 88 zugeteilten (abgemessenen) Menge an Hilfsstoff aus dem Behälter 14 versorgt.

Anhand der Figur 4 ist erkennbar, dass am Auslass des Gebläses 98 eine erste, mit einem relativ großen Querschnitt ausgestattete Verzweigungsleitung 106 angeordnet ist, die an ihrem stromab liegenden Ende in zwei Zweige mündet, an denen jeweils eine größere Leitung 108 mit etwa dem halben Querschnitt der Verzweigungsleitung 106 folgt. Die größere Leitung 108 geht ihrerseits endseitig in jeweils acht Leitungen 102 über, die jeweils zu einer der Kammern 94 führt.

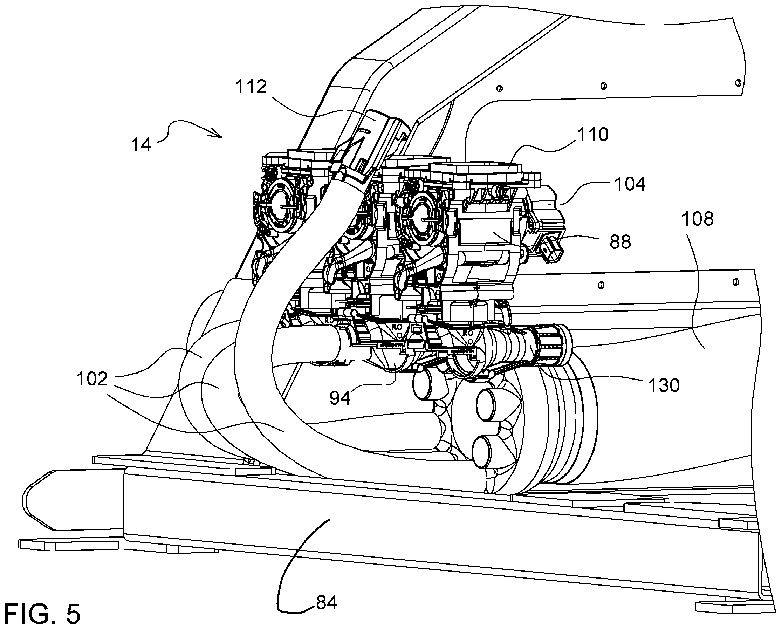

Durch oberhalb der Dosiereinheiten 88 und unterhalb der Auslässe 94 positionierte Schieber 110 können jeweils nicht benötigte Dosiereinheiten 88 deaktiviert werden, z.B. wenn nur eine Teilbreite der Sämaschine 10 und somit nicht alle Reiheneinheiten 28 benötigt werden, oder eine Fahrgasse anzulegen ist. Die zugehörige Leitung 102 kann in diesem Fall von der Kammer 94 abgekoppelt und z.B. mit einem Deckel 112 verschlossen werden. In Figur 5 ist mit dem Bezugszeichen 130 ein Stutzen gekennzeichnet, auf welchen eine der dort nicht gezeigten Leitungen 40, 42 aufgesteckt und fixiert werden kann.

Es ist erkennbar, dass die links angeordneten Dosiereinheiten 88 mit einer ersten Kupplungseinheit 38 (und mit den Reiheneinheiten 26 der linken Hälfte der Sämaschine 12) und alle rechts angeordneten Dosiereinheiten 88 mit einer zweiten Kupplungseinheit 38 (und mit den Reiheneinheiten 26 der rechten Hälfte der Sämaschine 16) verbunden sind.

Vorzugsweise ist die Zuordnung zu den Reiheneinheiten 28 derart, dass die am weitesten vorn angeordneten Dosiereinheiten 88 mit den Reiheneinheiten 28 in der Mitte der Sämaschine 14 verbunden sind. Dadurch erreicht man zumindest näherungsweise gleiche Leitungslängen für alle Reiheneinheiten 28.

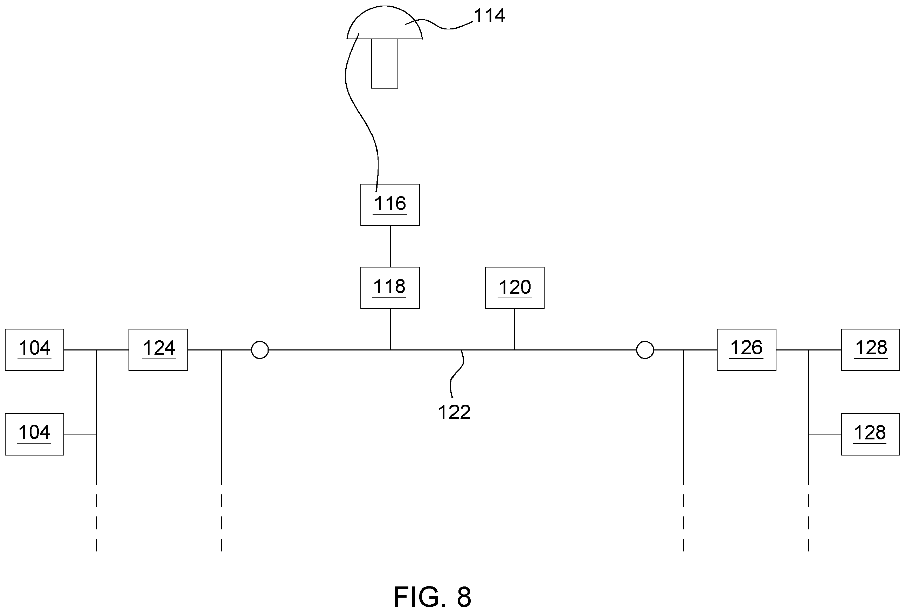

Wie in der Figur 8 dargestellt, kann die Ansteuerung von Antrieben 128 der Dosiereinheiten 50 der Sämaschine 12 und der Antriebe 104 der Dosiereinheiten 88 des Behälters 14 für Hilfsmaterial durch ein Bussystem (ISO 11783) erfolgen. Anhand der Position, die mittels einer Antenne 114 zum Empfang von Signalen eines satellitenbasierten Positionsbestimmungssystems wie GPS oder Galileo und eines zugehörigen Empfängers 116 ermittelt und einer Kontrolleinrichtung 118 übermittelt wird, definiert die Kontrolleinrichtung 118 in an sich bekannter Weise Stellsignale für die Antriebe 128 und 104, die über einen Bus 122, der insbesondere nach ISO 11783 arbeitet, und Kontrolleinheiten 124, 126 an die Antriebe 128, 104 übermittelt werden. Eine Beeinflussung oder Kontrolle ist über ein an den Bus 122 angeschlossenes virtuelles Terminal 120 möglich. Es besteht somit die Möglichkeit, der Kontrolleinrichtung 118 im Vorab ortsspezifisch definierte Ausbringraten für das Saatgut und den Hilfsstoff zu übermitteln und diese selbsttätig anzusteuern. Anders als in der Figur 8 gezeigt, könnte jedem der Antriebe 128, 108 eine getrennte Kontrolleinheit 124, 126 zugeordnet werden.

Im Ergebnis ermöglicht die dargestellte Anordnung eine reihenabhängige und ggf. ortsspezifische Vorgabe und selbsttätige Ansteuerung der Ausbringraten des Hilfsstoffs auch bei einem pneumatischen Transport des Hilfsstoffs, der eine Anbringung des Behälters 14 auch in einem größeren Abstand von der Sämaschine 12 und somit auch Verwendung größerer Behälter 14 als bei nur durch die Schwerkraft bewerkstelligter Zuförderung des Hilfsstoffs erlaubt. Anstelle an der Vorderseite des Ackerschleppers 10 könnte der Behälter 14 somit auch an einem separaten Wagen (so genannter "Air Cart") angebracht werden, der zwischen Ackerschlepper 10 und Sämaschine 12 positioniert ist. Es sei noch angemerkt, dass als Hilfsstoff durch die gezeigte Anordnung auch Saatgut aus dem Behälter 14 zur Abgabeeinrichtung 70 geführt werden könnte, das beispielsweise eine andere Pflanzenart als das von den Säeinheiten 68 abgegebene Saatgut sein könnte. Auch könnte man auf die gezeigte Weise Saatgut aus einem anderen Behälter (nicht gezeigt) dem Saatgutbehälter 48 zuführen oder es analog zum Hilfsstoff direkt in eine Furche im Boden abgeben.

## Patentansprüche

1. Anordnung zur pneumatischen Förderung eines Hilfsstoffs zu einer mit einer Mehrzahl an Reiheneinheiten (28) ausgestatteten Sämaschine (12), umfassend einen von der Sämaschine (12) im Abstand angeordneten Behälter (14) zur Aufnahme des Hilfsstoffs, eine Mehrzahl an Dosiereinheiten (88), die jeweils mit einem ihnen zugeordneten Antrieb (104) verbunden und konfiguriert sind, Hilfsstoff aus dem Behälter (14) abzumessen und in einen Luftstrom einzufügen, und eine Mehrzahl an Leitungen (34, 36, 40, 42, 64, 66), mit denen jeweils ein von einer Dosiereinheit (88) mit dem Hilfsstoff beaufschlagter Luftstrom separat an eine Reiheneinheit (28) führbar ist.

2. Anordnung nach Anspruch 1, wobei die Antriebe (104) unabhängig voneinander ansteuerbar sind.

3. Anordnung nach Anspruch 1 oder 2, wobei der Behälter (14) an der Vorderseite eines Ackerschleppers (10) und die Sämaschine (12) an der Rückseite des Ackerschleppers (10) angebracht ist.

4. Anordnung nach einem der vorhergehenden Ansprüche, wobei eine Anzahl an Dosiereinheiten (88) in einer Reihe angeordnet sind.

5. Anordnung nach Anspruch 4, wobei die Reihe der Dosiereinheiten (88) in Vorwärtsrichtung ausgerichtet ist.

6. Anordnung nach Anspruch 5, wobei zwei Reihen von Dosiereinheiten (88) nebeneinander angeordnet sind.

7. Anordnung nach einem der Ansprüche 3 bis 6, wobei die Leitungen (34, 36, 40, 42, 64, 66) zwischen dem Ackerschlepper (10) und dem Behälter (14) und/oder der Sämaschine (12) durch Mehrfach-Kupplungseinheiten (38, 62) trennbar verbunden sind.

8. Anordnung nach einem der Ansprüche 1 bis 7, wobei der Hilfsstoff in den Reiheneinheiten der Sämaschine (12) räumlich getrennt von ausgebrachtem Saatgut ausbringbar ist.

9. Anordnung nach Anspruch 8, wobei der Hilfsstoff Dünger und/oder Chemikalien umfasst.

10. Kombination aus einem Behälter (14) für Hilfsstoff, einer Sämaschine (12) und einer Anordnung nach einem der vorhergehenden Ansprüche.
